# EUROPEAN PATENT APPLICATION

(11) **EP 4 744 818 A1**
(43) Date of publication of application: **20.05.2026**
(21) Application number: 24876014.2
(22) Date of filing: 16.05.2024
(51) Int. Cl.: B23K 37/04, B23K 26/21

(54) **WELDING PRESSING PLATE, WELDING SYSTEM, AND WELDING METHOD**

(30) Priority: 12.10.2023 CN 202311322413
(71) Applicant: Contemporary Amperex Technology Co., Limited, Ningde, Fujian 352100 (CN)
(72) Inventor: WU, Kai, Ningde, Fujian 352100 (CN); YANG, Mukai, Ningde, Fujian 352100 (CN); PAN, Wensheng, Ningde, Fujian 352100 (CN); LI, Jie, Ningde, Fujian 352100 (CN); FAN, Xiang, Ningde, Fujian 352100 (CN); ZHANG, Yifei, Ningde, Fujian 352100 (CN)
(74) Representative: Ziebig Hengelhaupt Intellectual Property Attorneys Patentanwaltskanzlei PartGmbB
(86) International application number: PCT/CN2024/093720
(87) International publication number: WO 2025/077187

(57) **Abstract**

The present application discloses a welding pressing plate, a welding system, and a welding method. The welding pressing plate includes a pressing plate main body and a movable pressing arm, where the pressing plate main body is configured to cover an end surface of a weldment; the movable pressing arm is connected to the pressing plate main body, and the movable pressing arm is configured to press the weldment through the pressing plate main body, and the movable pressing arm extends in a direction away from the pressing plate main body, and can drive the pressing plate main body to move relative to the weldment to change a position of an edge of the weldment shielded by the movable pressing arm and/or the pressing plate main body. Therefore, the weldment can be pressed by the movable pressing arm and the pressing plate main body, which facilitates welding the weldment, thereby improving the stability of welding. The movable pressing arm can also be used to drive the pressing plate main body to move relative to the weldment to change the position of the edge of the weldment shielded by the movable pressing arm and/or the pressing plate main body, which facilitates welding along the edge of the weldment while pressing the weldment, thereby improving the reliability of welding and the convenience in a process of welding.

## Description

The present application claims priority to the Chinese patent application No. 2023113224137 filed on October 12, 2023 and entitled "WELDING PRESSING PLATE, WELDING SYSTEM, AND WELDING METHOD", the entire content of which is incorporated into the present application by reference.

### TECHNICAL FIELD

The present application relates to the technical field of welding, and in particular, to a welding pressing plate, a welding system, and a welding method.

### BACKGROUND

Welding is a process that welds two components together. Common welding methods include gas welding, fusion welding, laser welding, ultrasonic welding, and so forth.

When two components need to be welded, the components must be pressed to ensure close fit between them. The components are then welded to fix them together. However, how to achieve pressing while simultaneously facilitating smooth welding of the components remains a technical problem that urgently needs to be resolved.

### SUMMARY OF THE INVENTION

The main purpose of the present application is to provide a welding pressing plate, a welding system, and a welding method, aiming to solve the above-mentioned technical problems in the prior art.

In order to solve the technical problems in the prior art, the present application provides a welding pressing plate, which includes a pressing plate main body and a movable pressing arm, where the pressing plate main body is configured to cover an end surface of a weldment; the movable pressing arm is connected to the pressing plate main body, and the movable pressing arm is configured to press the weldment through the pressing plate main body, the movable pressing arm extends in a direction away from the pressing plate main body, and can drive the pressing plate main body to move relative to the weldment to change a position of an edge of the weldment shielded by the movable pressing arm and/or the pressing plate main body. Therefore, the pressing plate main body is configured to cover the end surface of the weldment, and the movable pressing arm is connected to the pressing plate main body. The weldment can be pressed by the movable pressing arm and the pressing plate main body to make the weldment fit closely with other components, which facilitates welding the weldment, thereby improving the stability of welding. The movable pressing arm can also be used to drive the pressing plate main body to move relative to the weldment to change the position of the edge of the weldment shielded by the movable pressing arm and/or the pressing plate main body, which facilitates welding along the edge of the weldment while pressing the weldment, thereby improving the reliability of welding and the convenience in a process of welding.

In some embodiments, the pressing plate main body extends in a first direction, in a second direction perpendicular to the first direction, the pressing plate main body is configured to cover a non-edge region of the end surface of the weldment, and the movable pressing arm extends in the second direction. Therefore, the pressing plate main body extends in the first direction, and can shield the end surface of the weldment, thereby reducing the risk of weld beads splashing onto the end surface of the weldment during welding, the movable pressing arm extends in the second direction, and the pressing plate main body only covers the non-edge region of the end surface of the weldment in the second direction. The position of the edge of the weldment shielded by the pressing plate main body and the movable pressing arm can be changed just by moving the pressing plate main body in the first direction, thereby mitigating the problem that the pressing plate main body hinders the welding operation along the edge of the weldment and improving the welding efficiency.

In some embodiments, the movable pressing arm is arranged in the middle relative to both ends of the pressing plate main body in the first direction. Therefore, by arranging the movable pressing arm in the middle, the pressing effect of pressing the weldment can be improved, and it is also convenient to change the position of the edge of the weldment shielded by the movable pressing arm in a process of movement in the first direction, thereby mitigating the problem that the movable pressing arm hinders the welding operation along the edge of the weldment and improving the welding efficiency.

In some embodiments, the pressing plate main body is provided with a gas output hole, an opening of the gas output hole is located in an end surface of the pressing plate main body configured to press the weldment, at least one of the pressing plate main body and the movable pressing arm is provided with a gas input hole, and the gas input hole is in communication with the gas output hole. Therefore, the pressing plate main body is provided with both the gas input hole and the gas output hole, and the opening of the gas output hole is located in the end surface of the pressing plate main body configured to press the weldment. Gas can be output to the gas output hole through the gas input hole, so that in the process of movement of the welding pressing plate, the weld beads generated during welding can be blown in a direction away from the end surface of the weldment by gas flow generated by the gas, thereby reducing the risk of the weld beads splashing onto the end surface of the weldment during welding.

In some embodiments, the pressing plate main body is provided with a buffer gas cavity, and the gas output hole is in communication with the gas input hole through the buffer gas cavity. Therefore, through the design of the buffer gas cavity, a communication method between the gas output hole and the gas input hole can be simplified, and the gas flow input from the gas input hole can be divided into gas flow in multiple directions to be output through the buffer gas cavity, thereby further reducing the risk of the weld beads splashing onto the end surface of the weldment during welding.

In some embodiments, the welding pressing plate includes a first cover plate and a second cover plate, and the first cover plate and the second cover plate are fitted together to form the pressing plate main body; the first cover plate has a first buffer gas groove, and the second cover plate covers a groove opening of the first buffer gas groove to form the buffer gas cavity; and/or, the second cover plate has a second buffer gas groove, and the first cover plate covers a groove opening of the second buffer gas groove to form the buffer gas cavity. Therefore, by covering the groove opening of the first buffer gas groove of the first cover plate with the second cover plate cover, and/or covering the gas opening of the second buffer gas groove of the second cover plate with the first cover plate cover to form the buffer gas cavity, the forming difficulty of the buffer gas cavity and the gas output hole can be reduced, and the production costs can be reduced.

In some embodiments, a number of the gas output holes is plural, and the plurality of gas output holes are respectively in communication with the buffer gas cavity. Therefore, by providing the plurality of gas output holes and enabling the plurality of gas output holes to be respectively in communication with the buffer gas cavity, the gas flow input through the gas input hole can be conveniently divided into gas flow in multiple directions to be output through the buffer gas cavity, thereby further reducing the risk of the weld beads splashing onto the end surface of the weldment during welding.

In some embodiments, the gas input hole is formed in the movable pressing arm, and the movable pressing arm is provided with a gas passage enabling the gas input hole to be in communication with the buffer gas cavity. Therefore, the gas output hole and the gas input hole are in communication with each other through the gas passage and the buffer gas cavity, which facilitates guiding the gas flow to the buffer gas cavity through the gas passage and then to flow out through the gas output hole, and can simplify a communication method between the gas output hole and the gas input hole. The gas input hole is located in the movable pressing arm, and the risk of interference with welding can also be reduced when the gas is input through the gas input hole.

In some embodiments, the welding pressing plate includes a first cover plate and a second cover plate, and the first cover plate and the second cover plate are fitted together to form the movable pressing arm; the first cover plate has a first gas passing groove, and the second cover plate covers a groove opening of the first gas passing groove to form the gas passage; and/or, the second cover plate has a second gas passing groove, and the first cover plate covers a groove opening of the second gas passing groove to form the gas passage. Therefore, by covering the groove opening of the first gas passing groove of the first cover plate with the second cover plate, and/or covering the gas opening of the second buffer gas groove of the second cover plate with the first cover plate to form the gas passage, the forming difficulty of the gas passage and the gas input hole can be reduced, and the production costs can be reduced.

In some embodiments, the welding pressing plate includes a first cover plate and a second cover plate, the first cover plate includes a first main body portion and a second main body portion connected to each other, the second cover plate includes a third main body portion and a fourth main body portion connected to each other, the first main body portion covers the third main body portion to form the pressing plate main body, and the second main body portion covers the fourth main body portion to form the movable pressing arm. Therefore, the pressing plate main body and the movable pressing arm are formed when the first cover plate and the second cover plate are fitted together, which can simplify the forming difficulty of the pressing plate main body and the movable pressing arm, thereby further reducing the forming difficulty of the gas passage and the gas input hole, and reducing the production costs.

In some embodiments, the first main body portion has a first buffer gas groove, the second main body portion has a first gas passing groove in communication with the first buffer gas groove, the third main body portion covers a groove opening of the first buffer gas groove to form a buffer gas cavity, and the fourth main body portion covers a groove opening of the first gas passing groove to form the gas passage; and/or, the third main body portion has a second buffer gas groove, the fourth main body portion has a second gas passing groove in communication with the second buffer gas groove, the third main body portion covers a groove opening of the second buffer gas groove to form a buffer gas cavity, and the second main body portion covers a groove opening of the second gas passing groove to form the gas passage. Therefore, by simultaneously forming the first buffer gas groove and the first gas passing groove, that are in communication with each other, in the first cover plate, and/or simultaneously forming the second buffer gas groove and the second gas passing groove, that are in communication with each other, in the second cover plate, the forming difficulty of the gas passage, the gas input hole, the gas output hole, and the buffer gas cavity can be reduced, and the production costs can be reduced.

In order to solve the technical problems in the prior art, the present application further provides a welding system, which includes a welding apparatus and the above-mentioned welding pressing plate, where the welding pressing plate is configured to press a weldment, and the welding apparatus is configured to weld the weldment along an edge of the weldment.

In order to solve the technical problems in the prior art, the present application further provides a welding method, which is applied to the above-mentioned welding system, and the welding method includes: pressing, by the movable pressing arm, the end surface of the weldment through the pressing plate main body; welding, by the welding apparatus, the weldment along an edge of the weldment; and in the process of welding, by the welding apparatus, the weldment, driving, by the movable pressing arm, the pressing plate main body to move relative to the weldment to change a position of the edge of the weldment shielded by the movable pressing arm and/or the pressing plate main body. Therefore, the weldment is pressed by the movable pressing arm and the pressing plate main body to make the weldment fit closely with other components, which facilitates welding the weldment, thereby improving the stability of welding. The movable pressing arm can also be moved to change the position of the edge of the weldment shielded by the movable pressing arm and/or the pressing plate main body in the process of welding, which facilitates welding along the edge of the weldment while pressing the weldment, thereby improving the reliability of welding and the convenience in the process of welding.

In some embodiments, the step of driving, by the movable pressing arm, the pressing plate main body to move relative to the weldment includes: driving, by the movable pressing arm, the pressing plate main body to be spaced apart from the end surface of the weldment; and when the pressing plate main body is spaced apart from the end surface of the weldment, driving, by the movable pressing arm, the pressing plate main body to move relative to the weldment. Therefore, when the pressing plate main body and the end surface of the weldment are spaced apart, the pressing plate main body is driven by the movable pressing arm to move relative to the weldment, which can reduce the risk that due to friction with the weldment in the process of movement, the weldment and the welding pressing plate are damaged, thereby improving the welding efficiency and the rate of finished products.

In some embodiments, after the step of driving, by the movable pressing arm, the pressing plate main body to be spaced apart from the end surface of the weldment, the welding method further includes: inputting a positive pressure gas flow to a gas output port of the pressing plate main body through the gas input hole of at least one of the pressing plate main body and the movable pressing arm. Therefore, the positive pressure gas flow is output to the gas output hole through the gas input hole, so that in the process of movement of the welding pressing plate, weld beads generated during welding can be blown in a direction away from the end surface of the weldment by the positive pressure gas flow, thereby reducing the risk of the weld beads splashing onto the end surface of the weldment during welding.

In some embodiments, the pressing plate main body extends in a first direction, in a second direction perpendicular to the first direction, the pressing plate main body is configured to cover a non-edge region of the end surface of the weldment, and the movable pressing arm extends in the second direction; the step of driving, by the movable pressing arm, the pressing plate main body to move relative to the weldment includes: if it is detected that the welding apparatus performs welding from a first point to a second point in a welding direction, where the first point is closer to the movable pressing arm than the second point in the welding direction, driving, by the movable pressing arm, the pressing plate main body to move from a first position to a second position in the first direction, where the first position includes a position where the movable pressing arm is located outside the first point and the second point in the welding direction, and the second position includes a position where the movable pressing arm shields a region between the first point and the second point in the welding direction. Therefore, after the welding apparatus performs welding from the first point to the second point, the movable pressing arm rotates from the first position to the second position to change the position shielded by the movable pressing arm and the pressing plate main body from the first position that has not been welded to the second position that has been welded, thereby continuously pressing the weldment through the pressing plate without affecting welding, thereby improving the welding efficiency.

In some embodiments, an extension length of the pressing plate main body in the first direction is greater than an extension length of the end surface of the weldment in the first direction; at the first position, the pressing plate main body does not shield the edge of the weldment between the first point and the second point in the first direction; and at the second position, the pressing plate main body does not shield the edge of the weldment between the first point and the second point in an opposite direction of the first direction. In this way, the end surface of the weldment can be shielded by the pressing plate main body, thereby reducing the risk of the weld beads splashing onto the end surface of the weldment during welding. At the same time, the position of the edge of the weldment shielded by the pressing plate main body and the movable pressing arm can be changed by simply moving the pressing plate main body in the first direction, thereby mitigating the problem that the pressing plate main body hinders the welding operation along the edge of the weldment and improving the welding efficiency.

In some embodiments, the step of welding, by the welding apparatus, the weldment along the edge of the weldment includes: welding, by the welding apparatus, along the edge of the weldment to form a welding trajectory closed at both ends; and welding, by the welding apparatus, along a position closed at both ends to a third point to form an ending trajectory, where the third point is on the welding trajectory or outside the welding trajectory. Therefore, after the welding trajectory closed at both ends is achieved, welding to the third point continues, making the entire welding trajectory more complete and the welding stability higher.

### DESCRIPTION OF DRAWINGS

In order to illustrate the technical solutions in the embodiments of the present application or in the prior art more clearly, the drawings to be used in the embodiments will be briefly introduced below. Obviously, the drawings described below show only some embodiments of the present application. For those of ordinary skill in the art, other drawings can also be obtained based on these drawings without any creative effort.
FIG. 1 is a schematic structural view of a battery cell according to one or more embodiments;
FIG. 2 is a schematic structural view of a welding pressing plate pressed on an electrode column cover plate according to one or more embodiments;
FIG. 3 is a schematic structural view of the welding pressing plate pressed on a weldment according to one or more embodiments;
FIG. 4 is a first schematic structural view of the welding pressing plate according to one or more embodiments;
FIG. 5 is a cross-sectional schematic view of the welding pressing plate shown in FIG. 4 in an A-A direction;
FIG. 6 is a second schematic structural view of the welding pressing plate according to one or more embodiments;
FIG. 7 is a schematic structural view of the welding pressing plate shown in FIG. 6 with a part of a second cover plate cut off;
FIG. 8 is a schematic structural view of the welding pressing plate shown in FIG. 6 with a part of a first cover plate cut off;
FIG. 9 is a schematic structural view of a welding system according to one or more embodiments;
FIG. 10 is a schematic flowchart of a welding method according to one or more embodiments;
FIG. 11 is a schematic structural view of the welding pressing plate pressing the weldment at a first position according to one or more embodiments; and
FIG. 12 is a schematic structural view of the welding pressing plate pressing the weldment at a second position according to one or more embodiments.

Reference numerals: battery cell 1; electrode column cover plate 2; electrode column main body 3; housing 4; weldment 5;
welding pressing plate 10; pressing plate main body 100; gas output hole 110; buffer gas cavity 120; movable pressing arm 200; gas input hole 210; gas passage 220; first cover plate 300; first main body portion 310; first buffer gas groove 311; second main body portion 320; first gas passing groove 321; second cover plate 400; third main body portion 410; second buffer gas groove 411; fourth main body portion 420; second gas passing groove 421; first direction X1; second direction X2;
welding system 20; welding apparatus 30; first point A1; second point A2; third point A3; welding direction Y.

### DETAILED DESCRIPTION

Embodiments of the technical solutions of the present application will be described in detail below with reference to the drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of' refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meaning of the above terms in the embodiments of present application may be understood according to specific situations.

At present, from the development of market situation, the application of batteries is becoming more and more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of batteries, the market demand thereof is also constantly expanding.

The battery can be used in an electric apparatus, so that the electric apparatus can realize corresponding functions through the electric energy provided by the battery. The electric apparatus may include, but is not limited to, a mobile phone, a tablet, a laptop, an electric toy, an electric tool, a battery car, an electric vehicle, a ship, a spacecraft, and the like. The electric toy may include fixed or mobile electric toys, such as game consoles, electric car toys, electric ship toys, and electric airplane toys. The spacecraft may include airplanes, rockets, space shuttles, spaceships, and the like.

The electric apparatus may be a vehicle, and the vehicle includes a battery. The vehicle may be a fuel vehicle, a gas vehicle, or a new energy vehicle. The new energy vehicle may be an all-electric vehicle, a hybrid electric vehicle, an extended-range electric vehicle, or the like. A battery is provided inside the vehicle and may be arranged at the bottom or head or tail of the vehicle. The battery may be used to power the vehicle. For example, the battery may be used as an operating power source of the vehicle. The vehicle may further include a controller and a motor. The controller is used to control the battery to power the motor, for example, for meeting operating power demands when the vehicle is starting, navigating, and traveling. In some embodiments of the present application, the battery may not only be used as the operating power source of the vehicle, but also as a driving power source of the vehicle to replace or partially replace fuel or natural gas to provide driving power for the vehicle.

The shape of the battery may include, but is not limited to, a square, a cylinder, or any other shape.

In some embodiments, the battery may include a box body and a plurality of battery cells, and the battery cells are accommodated in the box body. If the box body is configured to provide an accommodating space for the battery cells, the plurality of battery cells can be connected in series, or in parallel, or in parallel-series. Parallel-series connection means that the plurality of battery cells are connected in both series and parallel. The plurality of battery cells may be directly connected in series, in parallel, or in parallel-series, and then the entirety formed by the plurality of battery cells is accommodated in the box body. Of course, the battery may also be formed by connecting the plurality of battery cells in series, in parallel, or in parallel-series to form battery modules, and then connecting the plurality of battery modules in series, in parallel, or in parallel-series to form an entirety, which is accommodated in the box body.

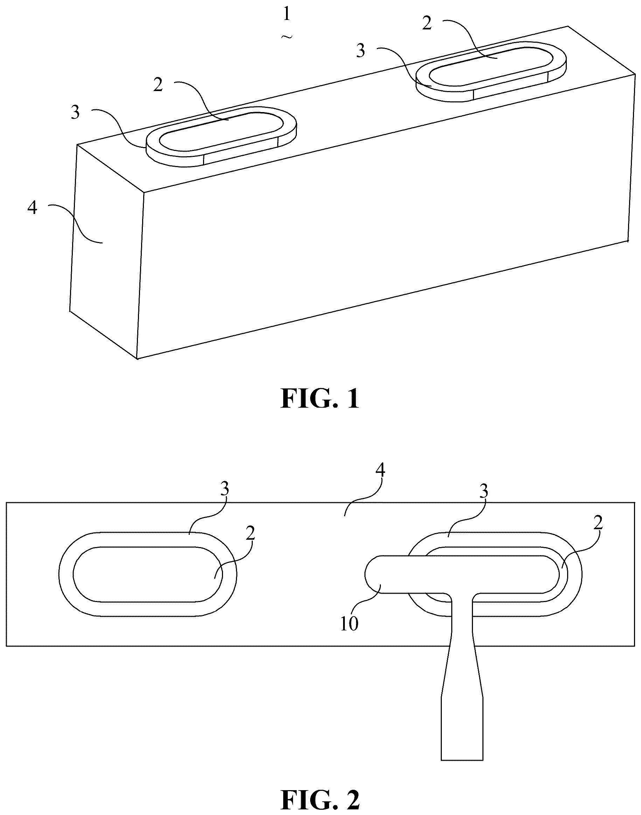

Referring to FIG. 1, FIG. 1 is a schematic structural view of a battery cell according to one or more embodiments.

A battery cell 1 refers to a smallest unit forming the battery, and the battery cell 1 may include a housing 4, an electrode assembly, and other functional components. The housing 4 may form an internal environment for accommodating the electrode assembly, and the electrode assembly is located within the internal environment of the housing 4. The electrode assembly is a component in the battery cell 1 that undergoes electrochemical reactions, and one or more electrode assemblies may be included in the housing. The electrode assembly is mainly formed by winding or stacking a positive electrode plate and a negative electrode plate, and a separator is generally arranged between the positive electrode plate and the negative electrode plate. The portions of the positive electrode plate and the negative electrode plate that have active materials constitute a main body portion of the electrode assembly, and the portions of the positive electrode plate and the negative electrode plate that do not have active materials each constitute a tab. A positive tab and a negative tab may be located at one end of the main body portion together or located at two ends of the main body portion respectively. In the charging and discharging process of the battery, the positive electrode active material and the negative electrode active material react with an electrolyte, and the tabs are connected to an electrode column to form a current loop.

In order to improve the product performance of the battery cell 1, the present application provides a new battery cell 1, the new battery cell 1 includes an electrode column, and the electrode column is hollow. Specifically, the electrode column may include an electrode column main body 3 and an electrode column cover plate 2. The electrode column main body 3 is annular and protrudes from an end wall of the housing 4. The portion of the housing 4 surrounding the electrode column main body 3 may be recessed inward to form a hollow groove, and a bottom wall of the hollow groove has an opening for the tab of the electrode assembly to be arranged in the hollow groove in a penetrating manner. The portion of the tab of the electrode assembly located in the hollow groove is in contact and in conduction with the electrode column main body 3. The electrode column cover plate 2 can cover a groove opening of the hollow groove to seal the hollow groove. Specifically, an annular boss can be arranged on a side wall of the hollow groove, and the electrode column cover plate 2 is connected to the annular boss in an overlapping manner so that the electrode column cover plate 2 can cover the groove opening of the hollow groove. Furthermore, a surface of a side of the electrode column cover plate 2 away from a bottom wall of the hollow groove can be in the same plane as a surface of a side of the electrode column main body 3 away from the bottom wall of the hollow groove, so as to facilitate welding between an outer edge of the electrode column cover plate 2 and an inner edge of the electrode column main body 3, so that the electrode column cover plate 2 and the electrode column main body 3 are fixedly connected.

Referring to FIG. 2, FIG. 2 is a schematic structural view of a welding pressing plate pressed on the electrode column cover plate according to one or more embodiments.

When the electrode column cover plate 2 and the electrode column main body 3 need to be welded, the electrode column cover plate 2 can be pressed by the welding pressing plate 10 to make the electrode column cover plate 2 and the electrode column main body 3 fit together, and then the electrode column cover plate 2 and the electrode column main body 3 are welded to fix the electrode column cover plate 2 and the electrode column main body 3 together.

For example, when it is necessary to weld the electrode column cover plate 2 and the electrode column main body 3, the electrode column cover plate 2 first covers the groove opening of the hollow groove, then the welding pressing plate 10 is placed on an end surface of the electrode column cover plate 2, and a downward pressure can be applied to the welding pressing plate 10 by other tooling equipment or manually to make the electrode column cover plate 2 and the electrode column main body 3 fit tightly, and then welding is performed along an upper edge where the electrode column cover plate 2 and the electrode column main body 3 fit together to fixedly connect the electrode column cover plate 2 and the electrode column main body 3.

Specifically, a welding process can be a one-time process. For example, in the process of welding, a position of the electrode column cover plate 2 shielded by a welding assembly can be changed to complete the welding operation of the electrode column cover plate 2 and the electrode column main body 3 without interrupting the welding operation. There can be two electrode columns on the battery cell 1, and both the electrode column cover plates 2 and the electrode column main bodies 3 of the two electrode columns can be fixed by welding. In an actual operation process, the electrode column cover plate 2 of one electrode column can be pressed first by one welding pressing plate 10, and after completing the welding operation of the electrode column cover plate 2 and the electrode column main body 3 of one electrode column, the welding operation of the electrode column cover plate 2 and the electrode column main body 3 of the other electrode column can be carried out. Alternatively, the electrode column cover plates 2 of the two electrode columns may be pressed simultaneously by two welding pressing plates 10, and then the welding operation may be performed on the electrode column cover plates 2 and the electrode column main bodies 3 of the two electrode columns simultaneously.

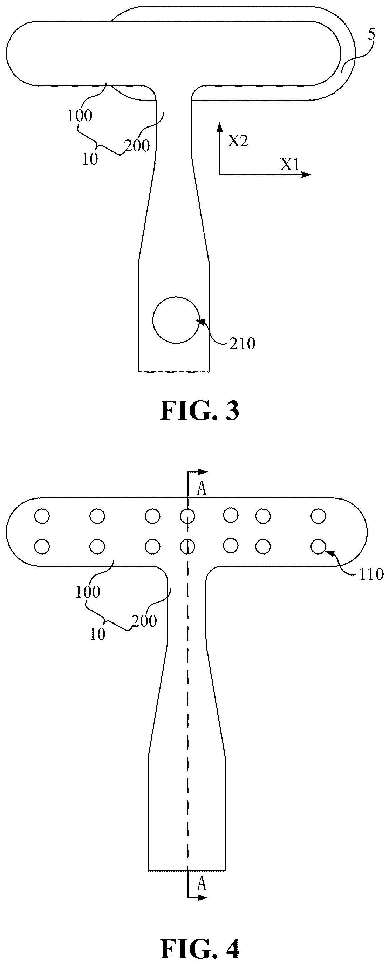

In order to mitigate the problem that the welding pressing plate 10 shields the position where welding is required while pressing a weldment 5, the present application provides a welding pressing plate. Referring to FIG. 3, FIG. 3 is a schematic structural view of the welding pressing plate pressed on the weldment according to one or more embodiments.

The welding pressing plate 10 includes a pressing plate main body 100 and a movable pressing arm 200. The pressing plate main body 100 is configured to cover an end surface of the weldment 5. The weldment 5 may be the above-mentioned electrode column cover plate 2. Of course, in other application scenarios, the weldment 5 may also be other components that need to be welded. The pressing plate main body 100 may be plate-shaped, and the shape of the pressing plate main body 100 may be arbitrary. For example, the end surface of the pressing plate main body 100 may be circular, elliptical, racetrack-shaped, polygonal, and the like. Specifically, the shape of the end surface of the pressing plate main body 100 can be similar to the shape of an end surface of a side of the weldment 5 pressed by the pressing plate main body 100. For example, when the pressed end surface of the weldment 5 is in a racetrack shape, an end surface of the pressing plate main body 100 configured to press the weldment 5 can be in a racetrack shape. For another example, when the pressed end surface of the weldment 5 is circular, the end surface of the pressing plate main body 100 configured to press the weldment 5 can be circular.

The movable pressing arm 200 is connected to the pressing plate main body 100, and is configured to press the weldment 5 through the pressing plate main body 100. The movable pressing arm 200 extends in a direction away from the pressing plate main body 100, and can drive the pressing plate main body 100 to move relative to the weldment 5 to change a position of an edge of the weldment 5 shielded by the movable pressing arm 200 and/or the pressing plate main body 100. The movable pressing arm 200 drives the pressing plate main body 100 to move relative to the weldment 5, which can be understood as that the movable pressing arm 200 translates relative to the end surface of the weldment 5. An external force may be applied to the movable pressing arm 200 by other tooling equipment or manually, so that the movable pressing arm 200 drives the pressing plate main body 100 to move relative to the weldment 5.

The movable pressing arm 200 may be fixedly connected or detachably connected to the pressing plate main body 100. For example, the movable pressing arm 200 can be integrated with the pressing plate main body 100, so that the movable pressing arm 200 is fixedly connected to the pressing plate main body 100, making it convenient for the movable pressing arm 200 to drive the pressing plate main body 100 to move together. Alternatively, the movable pressing arm 200 may be arranged on the pressing plate main body 100 in a sleeved manner so that the movable pressing arm 200 and the pressing plate main body 100 are detachably connected. Alternatively, the movable pressing arm 200 may be detachably connected or fixedly connected to the pressing plate main body 100 through other components. The movable pressing arm 200 extends in the direction away from the pressing plate main body 100. For example, the movable pressing arm 200 may extend in a direction of a side wall of the pressing plate main body 100, so as to apply the downward pressure to the movable pressing arm 200 so that the movable pressing arm 200 presses the weldment 5 through the pressing plate main body 100. For another example, the movable pressing arm 200 is connected to a side of the pressing plate main body 100 deviating from the weldment 5, and extends in a direction away from the weldment 5.

In a process of welding, the pressing plate main body 100 and/or the movable pressing arm 200 may shield the position that needs to be welded. At this time, the movable pressing arm 200 can be used to drive the pressing plate main body 100 to move relative to the weldment 5 to change the position of the edge of the weldment 5 shielded by the movable pressing arm 200 and/or the pressing plate main body 100. For example, the movable pressing arm 200 is connected to the side of the pressing plate main body 100 deviating from the weldment 5, and extends in the direction away from the weldment 5. An area of the end surface of the pressing plate main body 100 configured to cover the weldment 5 is larger than an area of the end surface of the weldment 5. At this time, when the pressing plate main body 100 covers the end surface of the weldment 5, the pressing plate main body 100 may shield the position of the edge of the weldment 5, while the movable pressing arm 200 may not shield the position of the edge of the weldment 5. The pressing plate main body 100 can be driven to move relative to the weldment 5 by the movable pressing arm 200 to change the position of the edge of the weldment 5 shielded by the pressing plate main body 100. For example, the movable pressing arm 200 can extend in a direction of the side wall of the pressing plate main body 100. The area of the end surface of the pressing plate main body 100 configured to cover the weldment 5 is less than the area of the end surface of the weldment 5. At this time, when the pressing plate main body 100 covers the end surface of the weldment 5, the pressing plate main body 100 may not shield the position of the edge of the weldment 5, while the movable pressing arm 200 may shield the position of the edge of the weldment 5. The pressing plate main body 100 can be driven to move relative to the weldment 5 by the movable pressing arm 200 to change the position of the edge of the weldment 5 shielded by the movable pressing arm 200. For example, the movable pressing arm 200 can extend in the direction of the side wall of the pressing plate main body 100. The area of the end surface of the pressing plate main body 100 configured to cover the weldment 5 is greater than the area of the end surface of the weldment 5. At this time, when the pressing plate main body 100 covers the end surface of the weldment 5, both the pressing plate main body 100 and the movable pressing arm 200 may shield the position of the edge of the weldment 5. The pressing plate main body 100 can be driven to move relative to the weldment 5 by the movable pressing arm 200 to change the position of the edge of the weldment 5 shielded by the movable pressing arm 200 and the pressing plate main body 100.

In the above embodiment, the pressing plate main body 100 is configured to cover the end surface of the weldment 5, and the movable pressing arm 200 is connected to the pressing plate main body 100. The weldment 5 can be pressed by the movable pressing arm 200 and the pressing plate main body 100 to make the weldment 5 fit closely with other components, which facilitates welding the weldment 5, thereby improving the stability of welding. The movable pressing arm 200 can also be used to drive the pressing plate main body 100 to move relative to the weldment 5 to change the position of the edge of the weldment 5 shielded by the movable pressing arm 200 and/or the pressing plate main body 100, which facilitates welding along the edge of the weldment 5 while pressing the weldment 5, thereby improving the reliability of welding and the convenience in the process of welding.

Further, the pressing plate main body 100 extends in a first direction X1, in a second direction X2 perpendicular to the first direction X1, the pressing plate main body 100 is configured to cover a non-edge region of the end surface of the weldment 5, and the movable pressing arm 200 extends in the second direction X2. The pressing plate main body 100 extends in the first direction X1, that is, and a size in the first direction X1 is greater than a size in the second direction X2, for example, the end surface of the pressing plate main body 100 configured to cover the weldment 5 may be rectangular, racetrack-shaped, etc. The end surface of the weldment 5 may also extend in the first direction X1, and the shape of the end surface of the pressing plate main body 100 may be similar to the shape of the end surface of the side of the weldment 5 pressed by the pressing plate main body 100, for example, the two end surfaces may be rectangular or racetrack-shaped. In the second direction X2, a size of the end surface of the weldment 5 may be slightly greater than a size of the end surface of the pressing plate main body 100, so that when the pressing plate main body 100 covers the end surface of the weldment 5, the pressing plate main body 100 can cover the non-edge region of the end surface of the weldment 5. The movable pressing arm 200 extends in the second direction X2, and a width of the movable pressing arm 200 in the first direction X1 is relatively small. When the pressing plate main body 100 is pressed on the end surface of the weldment 5, the shielded portion of the edge of the weldment 5 includes: a part of the edge shielded by the pressing plate main body 100 in the first direction X1 and a part of the edge shielded by the movable pressing arm 200 in the second direction X2. At this time, it is only necessary to drive the pressing plate main body 100 to move in the first direction X1 by the movable pressing arm 200 to change the position of the edge shielded by the pressing plate main body 100 and the movable pressing arm 200. Therefore, the pressing plate main body 100 extends in the first direction X1, and can shield the end surface of the weldment 5, thereby reducing the risk of weld beads splashing onto the end surface of the weldment 5 during welding, the movable pressing arm 200 extends in the second direction X2, and the pressing plate main body 100 only covers the non-edge region of the end surface of the weldment 5 in the second direction X2. The position of the edge of the weldment 5 shielded by the pressing plate main body 100 and the movable pressing arm 200 can be changed just by moving the pressing plate main body 100 in the first direction X1, thereby mitigating the problem that the pressing plate main body 100 hinders the welding operation along the edge of the weldment 5 and improving the welding efficiency.

Further, the movable pressing arm 200 is arranged in the middle relative to both ends of the pressing plate main body 100 in the first direction X1. The width of the movable pressing arm 200 in the first direction X1 is relatively small, and a joint of the movable pressing arm 200 and the pressing plate main body 100 is located in a middle position of the pressing plate main body 100 in the first direction X1. Therefore, by arranging the movable pressing arm 200 in the middle, the pressing effect of pressing the weldment 5 can be improved, and it is also convenient to change the position of the edge of the weldment 5 shielded by the movable pressing arm 200 in a process of movement in the first direction X1, thereby mitigating the problem that the movable pressing arm 200 hinders the welding operation along the edge of the weldment 5 and improving the welding efficiency.

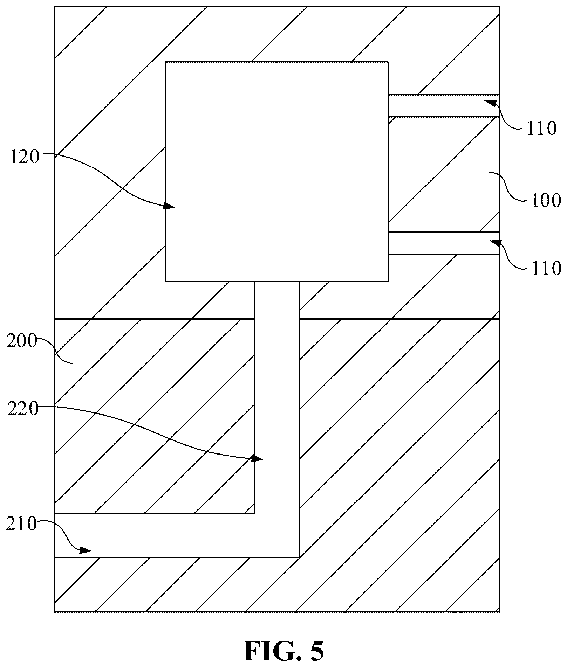

In combination with FIG. 4 and FIG. 5, FIG. 4 is a first schematic structural view of the welding pressing plate according to one or more embodiments, and FIG. 5 is a cross-sectional schematic view of the welding pressing plate shown in FIG. 4 in an A-A direction.

The pressing plate main body 100 is provided with a gas output hole 110, an opening of the gas output hole 110 is located in an end surface of the pressing plate main body 100 configured to press the weldment 5, at least one of the pressing plate main body 100 and the movable pressing arm 200 is provided with a gas input hole 210, and the gas input hole 210 is in communication with the gas output hole 110. A position of an opening of the gas input hole 210 may be in the pressing plate main body 100 and/or in the movable pressing arm 200. For example, when a number of the gas input hole 210 is one, an opening of the gas input hole 210 may be located in the pressing plate main body 100 or the movable pressing arm 200. When the number of the gas input holes 210 is plural, openings of the plurality of gas input holes 210 may be distributed in the pressing plate main body 100 and the movable pressing arm 200 at the same time. To facilitate processing and manufacturing, and inputting gas flow through the gas input hole 210, the opening of the gas input hole 210 may be located in a side of the pressing plate main body 100 deviating from the end surface for pressing the weldment 5, and/or in a side of the movable pressing arm 200 deviating from the end surface for pressing the weldment 5. The gas input hole 210 is in communication with the gas output hole 110, which is convenient for the gas flow to enter from the gas input hole 210 and be discharged from the gas output hole 110. For example, positive pressure gas flow can be input to the gas input hole 210, and the positive pressure gas flow flows in through the gas output hole 110. Therefore, the pressing plate main body 100 is provided with both the gas input hole 210 and the gas output hole 110, and the opening of the gas output hole 110 is located in the end surface of the pressing plate main body 100 configured to press the weldment 5. Gas can be output to the gas output hole 110 through the gas input hole 210, so that in the process of movement of the welding pressing plate 10, the weld beads generated during welding can be blown in a direction away from the end surface of the weldment 5 by the gas flow generated by the gas, thereby reducing the risk of the weld beads splashing onto the end surface of the weldment 5 during welding.

Furthermore, the pressing plate main body 100 is provided with a buffer gas cavity 120, and the gas output hole 110 is in communication with the gas input hole 210 through the buffer gas cavity 120. The pressing plate main body 100 may be a structure hollow inside, and a hollow cavity is configured to form the buffer gas cavity 120. Both the gas output hole 110 and the gas input hole 210 can be directly in communication with the buffer gas cavity 120. For example, the opening of the gas output hole 110 is located in a side of the end surface of the pressing plate main body 100 configured to press the weldment 5, and is directly in communication with the buffer gas cavity 120. The opening of the gas input hole is located in a side of the pressing plate main body 100 deviating from the end surface for pressing the weldment 5, and is directly in communication with the buffer gas cavity 120. The gas input hole 210 may also be in communication with the buffer gas cavity 120 through other gas channels, and further the gas input hole 210 and the gas output hole 110 may be in communication through the buffer gas cavity 120. Therefore, through the design of the buffer gas cavity 120, a communication method between the gas output hole 110 and the gas input hole 210 can be simplified, and the gas flow input from the gas input hole 210 can be divided into gas flow in multiple directions to be output through the buffer gas cavity 120, thereby further reducing the risk of the weld beads splashing onto the end surface of the weldment 5 during welding.

Furthermore, a number of the gas output holes 110 is plural, and the plurality of gas output holes 110 are respectively in communication with the buffer gas cavity 120. The number and arrangement manner of the gas output hole 110 can be set according to actual conditions. For example, the number of the gas output holes 110 is 12, 14, 16, 18, etc. The plurality of gas output holes 110 can be divided into two rows, the two rows of gas output holes 110 are arranged at intervals, and the plurality of gas output holes 110 in each row are arranged at equal intervals, etc. The plurality of gas output holes 110 are all in communication with the buffer gas cavity 120. After the positive pressure gas flow is input from the gas input hole 210, the gas flow can first pass through the buffer gas cavity 120, and then be diverted and discharged through the buffer gas cavity 120 and the gas output hole 110. Therefore, by providing the plurality of gas output holes 110, and enabling the plurality of gas output holes 110 to be respectively in communication with the buffer gas cavity 120, the gas flow input from the gas input hole 210 can be conveniently divided into gas flow in multiple directions to be output through the buffer gas cavity 120, thereby further reducing the risk of weld beads splashing onto the end surface of the weldment 5 during welding.

In some embodiments, the gas input hole 210 is formed in the movable pressing arm 200, and the movable pressing arm 200 is provided with a gas passage 220 enabling the gas input hole 210 to be in communication with the buffer gas cavity 120. The opening of the gas input hole 210 may be located in the side of the movable pressing arm 200 deviating from the end surface for pressing the weldment 5. The movable pressing arm 200 may be of a structure hollow inside, and a hollow cavity is configured to form the gas passage 220, one end of the gas passage 220 is in communication with the gas input hole 210, and the other end is in communication with the buffer gas cavity 120. The gas flow can flow through the gas input hole 210, the gas passage 220, the buffer gas cavity 120, and the gas output hole 110 in sequence. Therefore, the gas output hole 110 and the gas input hole 210 are in communication with each other through the gas passage 220 and the buffer gas cavity 120, which facilitates guiding the gas flow to the buffer gas cavity 120 through the gas passage 220 and then to flow out through the gas output hole 110, and can simplify a communication method between the gas output hole 110 and the gas input hole 210. The gas input hole 210 is located in the movable pressing arm 200, and the risk of interference with welding can be reduced when the gas is input through the gas input hole 210.

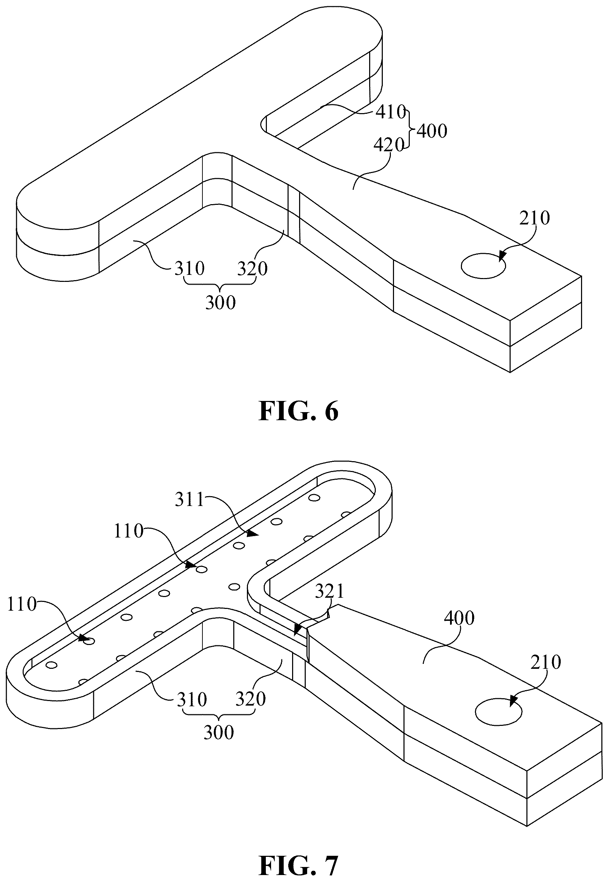

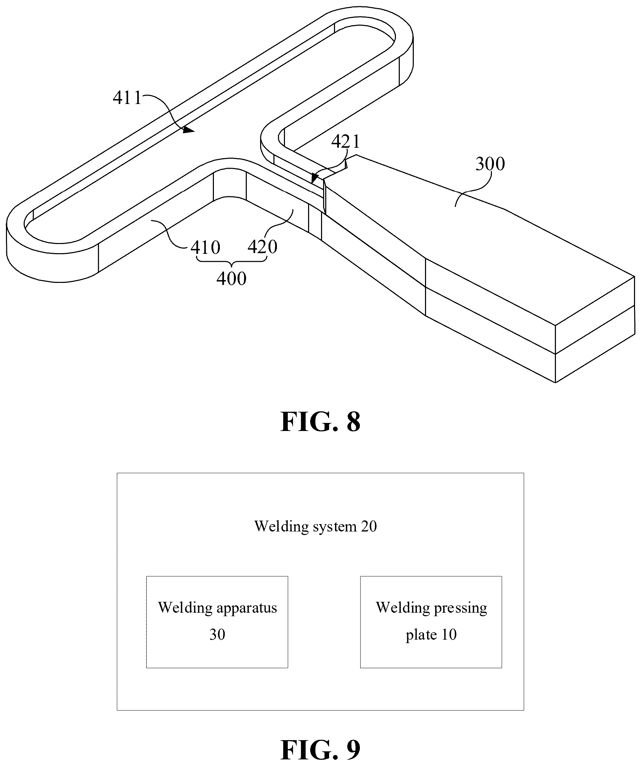

Referring to FIG. 6 to FIG. 8, FIG. 6 is a second schematic structural view of the welding pressing plate according to one or more embodiments, FIG. 7 is a schematic structural view of the welding pressing plate shown in FIG. 6 with a part of a second cover plate cut off, and FIG. 8 is a schematic structural view of the welding pressing plate shown in FIG. 6 with a part of a first cover plate cut off.

The welding pressing plate 10 includes a first cover plate 300 and a second cover plate 400, and the first cover plate 300 and the second cover plate 400 are fitted together to form the pressing plate main body 100 and/or the movable pressing arm 200.

In some embodiments, the first cover plate 300 and the second cover plate 400 are fitted together to form the pressing plate main body 100. In this embodiment, the first cover plate 300 and the second cover plate 400 are fitted together to form the pressing plate main body 100, and the movable pressing arm 200 can be an integral structure. For example, the movable pressing arm 200 can be an integral structure. After the first cover plate 300 and the second cover plate 400 are fitted together to form the pressing plate main body 100, the first cover plate 300 and the second cover plate 400 are fixedly connected to the movable pressing arm 200, respectively. Alternatively, the movable pressing arm 200 is also formed by fitting two cover plates. For example, the first cover plate 300 and the second cover plate 400 simultaneously form the movable pressing arm 200 and the pressing plate main body 100 when being fitted.

The first cover plate 300 has a first buffer gas groove 311, and the second cover plate 400 covers a groove opening of the first buffer gas groove 311 to form the buffer gas cavity 120; and/or, the second cover plate 400 has a second buffer gas groove 411, and the first cover plate 300 covers a groove opening of the second buffer gas groove 411 to form the buffer gas cavity 120. The first cover plate 300 may be recessed inward to form the first buffer gas groove 311, and the second cover plate 400 may be recessed inward to form the second buffer gas groove 411. In one embodiment, the first buffer gas groove 311 may be formed only in the first cover plate 300. When the first cover plate 300 and the second cover plate 400 are fitted to form the pressing plate main body 100, the second cover plate 400 covers the groove opening of the first buffer gas groove 311 to seal the groove opening of the first buffer gas groove 311 to form the buffer gas cavity 120. In another embodiment, the second buffer gas groove 411 may be formed only in the second cover plate 400. When the first cover plate 300 and the second cover plate 400 are fitted to form the pressing plate main body 100, the first cover plate 300 covers the groove opening of the second buffer gas groove 411 to seal the groove opening of the second buffer gas groove 411 to form the buffer gas cavity 120. In still another embodiment, the first buffer gas groove 311 may be formed in the first cover plate 300, and the second buffer gas groove 411 may be formed in the second cover plate 400. When the first cover plate 300 and the second cover plate 400 are fitted to form the pressing plate main body 100, the first cover plate 300 covers the groove opening of the second buffer gas groove 411 to seal the groove opening of the second buffer gas groove 411, and the second cover plate 400 covers the groove opening of the first buffer gas groove 311 to seal the groove opening of the second buffer gas groove 411, so as to form the buffer gas cavity 120 through the first buffer gas groove 311 and the second buffer gas groove 411 together. Therefore, by covering the groove opening of the first buffer gas groove 311 of the first cover plate 300 with the second cover plate 400, and/or covering the gas opening of the second buffer gas groove 411 of the second cover plate 400 with the first cover plate 300 to form the buffer gas cavity 120, the forming difficulty of the buffer gas cavity 120 and the gas output hole 110 can be reduced, and the production costs can be reduced.

In some embodiments, the first cover plate 300 and the second cover plate 400 are fitted to form the movable pressing arm 200. In this embodiment, the first cover plate 300 and the second cover plate 400 are fitted together to form the movable pressing arm 200, and the pressing plate main body 100 can be an integral structure. For example, the pressing plate main body 100 can be an integral structure. After the first cover plate 300 and the second cover plate 400 are fitted together to form the movable pressing arm 200, the first cover plate 300 and the second cover plate 400 are fixedly connected to the pressing plate main body 100, respectively. Alternatively, the pressing plate main body 100 is also formed by fitting two cover plates. For example, the first cover plate 300 and the second cover plate 400 simultaneously form the movable pressing arm 200 and the pressing plate main body 100 when being fitted.

The first cover plate 300 has a first gas passing groove 321, and the second cover plate 400 covers a groove opening of the first gas passing groove 321 to form the gas passage 220; and/or, the second cover plate 400 has a second gas passing groove 421, and the first cover plate 300 covers a groove opening of the second gas passing groove 421 to form the gas passage 220. The first cover plate 300 may be recessed inward to form the first gas passing groove 321, and the second cover plate 400 may be recessed inward to form the second gas passing groove 421. In one embodiment, the first gas passing groove 321 may be formed only in the first cover plate 300. When the first cover plate 300 and the second cover plate 400 are fitted to form the movable pressing arm 200, the second cover plate 400 covers the groove opening of the first gas passing groove 321 to seal the groove opening of the first gas passing groove 321, so as to form the gas passage 220. In another embodiment, the second gas passing groove 421 may be formed only in the second cover plate 400. When the first cover plate 300 and the second cover plate 400 are fitted to form the movable pressing arm 200, the first cover plate 300 covers the groove opening of the second gas passing groove 421 to seal the groove opening of the second gas passing groove 421, so as to form the gas passage 220. In another embodiment, the first gas passing groove 321 may be formed in the first cover plate 300, and the second gas passing groove 421 may be formed in the second cover plate 400. When the first cover plate 300 and the second cover plate 400 are fitted to form the movable pressing arm 200, the first cover plate 300 covers the groove opening of the second gas passing groove 421 to seal the groove opening of the second gas passing groove 421, and the second cover plate 400 covers the groove opening of the first gas passing groove 321 to seal the groove opening of the second gas passing groove 421, so as to form the gas passage 220 through the first gas passing groove 321 and the second gas passing groove 421 together. Therefore, by covering the groove opening of the first gas passing groove 321 of the first cover plate 300 with the second cover plate 400, and/or covering the gas opening of the second buffer gas groove 411 of the second cover plate 400 with the first cover plate 300 to form the gas passage 220, the forming difficulty of the gas passage 220 and the gas input hole 210 can be reduced, and the production costs can be reduced.

In some embodiments, the welding pressing plate 10 includes a first cover plate 300 and a second cover plate 400, the first cover plate 300 includes a first main body portion 310 and a second main body portion 320 connected to each other, the second cover plate 400 includes a third main body portion 410 and a fourth main body portion 420 connected to each other, the first main body portion 310 covers the third main body portion 410 to form the pressing plate main body 100, and the second main body portion 320 covers the fourth main body portion 420 to form the movable pressing arm 200. The first cover plate 300 and the second cover plate 400 are separately provided, and the shapes of the first cover plate 300 and the second cover plate 400 may be the same, for example, both are a T shape. The first main body portion 310 and the third main body portion 410 may have the same shape and size, and the second main body portion 320 and the fourth main body portion 420 may have the same shape and size. When the first cover plate 300 covers the second cover plate 400, an edge of the first cover plate 300 and an edge of the second cover plate 400 may be completely fitted to form the pressing plate main body 100 and the movable pressing arm 200. The first cover plate 300 and the second cover plate 400 may be detachably connected or fixedly connected. For example, screw holes may be formed in the first cover plate 300 and the second cover plate 400, and studs penetrate through the screw holes in the first cover plate 300 and the second cover plate 400 to make the first cover plate 300 and the second cover plate 400 detachably connected. For example, after the first cover plate 300 and the second cover plate 400 are fitted, welding may be performed along edges of the first cover plate 300 and the second cover plate 400 to fixedly connect the first cover plate 300 and the second cover plate 400. Therefore, the pressing plate main body 100 and the movable pressing arm 200 are formed when the first cover plate 300 and the second cover plate 400 are fitted together, which can simplify the forming difficulty of the pressing plate main body 100 and the movable pressing arm 200, thereby further reducing the forming difficulty of the gas passage 220 and the gas input hole 210, and reducing the production costs.

Furthermore, the first main body portion 310 has the first buffer gas groove 311, the second main body portion 320 has the first gas passing groove 321 in communication with the first buffer gas groove 311, the third main body portion 410 covers the groove opening of the first buffer gas groove 311 to form the buffer gas cavity 120, and the fourth main body portion 420 covers the groove opening of the first gas passing groove 321 to form the gas passage 220. And/or, the third main body portion 410 has the second buffer gas groove 411, the fourth main body portion 420 has the second gas passing groove 421 in communication with the second buffer gas groove 411, the third main body portion 410 covers the groove opening of the second buffer gas groove 411 to form the buffer gas cavity 120, and the second main body portion 320 covers the groove opening of the second gas passing groove 421 to form the gas passage 220. The gas output hole 110 may be formed in a bottom wall of the first buffer gas groove 311, and the gas input hole 210 may be formed in the fourth main body portion 420 and is in communication with the second gas passing groove 421.

The first cover plate 300 may be recessed inward to form the first buffer gas groove 311 and the first gas passing groove 321, and the first buffer gas groove 311 and the first gas passing groove 321 are in communication with each other. The second cover plate 400 may be recessed inward to form the second buffer gas groove 411 and the second gas passing groove 421, and the second buffer gas groove 411 and the second gas passing groove 421 are in communication with each other. In one embodiment, the first buffer gas groove 311 and the first gas passing groove 321 may be formed only in the first cover plate 300. When the first cover plate 300 and the second cover plate 400 are fitted to form the pressing plate main body 100 and the movable pressing arm 200, the second cover plate 400 covers the groove opening of the first buffer gas groove 311 and the groove opening of the first gas passing groove 321 to seal the groove opening of the first buffer gas groove 311 and the groove opening of the first gas passing groove 321 to form the buffer gas cavity 120 and the gas passage 220. In another embodiment, the second buffer gas groove 411 and the second gas passing groove 421 may be formed only in the second cover plate 400. When the first cover plate 300 and the second cover plate 400 are fitted to form the pressing plate main body 100 and the movable pressing arm 200, the first cover plate 300 covers the groove opening of the second buffer gas groove 411 and the groove opening of the second gas passing groove 421 to seal the groove opening of the second buffer gas groove 411 and the groove opening of the second gas passing groove 421 to form the buffer gas cavity 120 and the gas passage 220. In still another embodiment, the first buffer gas groove 311 and the first gas passing groove 321 may be formed in the first cover plate 300, and the second buffer gas groove 411 and the second gas passing groove 421 may be formed in the second cover plate 400. When the first cover plate 300 and the second cover plate 400 are fitted to form the pressing plate main body 100 and the movable pressing arm 200, the first cover plate 300 covers the groove opening of the second buffer gas groove 411 and the groove opening of the second gas passing groove 421 to seal the groove opening of the second buffer gas groove 411 and the groove opening of the second gas passing groove 421, and the second cover plate 400 covers the groove opening of the first buffer gas groove 311 and the groove opening of the first gas passing groove 321 to seal the groove opening of the first buffer gas groove 311 and the groove opening of the first gas passing groove 321, so as to form the buffer gas cavity 120 through the first buffer gas groove 311 and the second buffer gas groove 411 together, and form the gas passage 220 through the first gas passing groove 321 and the second gas passing groove 421 together. Therefore, by simultaneously forming the first buffer gas groove 311 and the first gas passing groove 321, that are in communication with each other, in the first cover plate 300, and/or simultaneously forming the second buffer gas groove 411 and the second gas passing groove 421, that are in communication with each other, in the second cover plate, the forming difficulty of the gas passage 220, the gas input hole 210, the gas output hole 110, and the buffer gas cavity 120 can be reduced, and the production costs can be reduced.

In conclusion, the pressing plate main body 100 is configured to cover the end surface of the weldment 5, and the movable pressing arm 200 is connected to the pressing plate main body 100. The weldment 5 can be pressed by the movable pressing arm 200 and the pressing plate main body 100 to make the weldment 5 fit closely with other components, which facilitates welding the weldment 5, thereby improving the stability of welding. The movable pressing arm 200 can also be used to drive the pressing plate main body 100 to move relative to the weldment 5 to change the position of the edge of the weldment 5 shielded by the movable pressing arm 200 and/or the pressing plate main body 100, which facilitates welding along the edge of the weldment 5 while pressing the weldment 5, thereby improving the reliability of welding and the convenience in the process of welding.

In order to solve the technical problems in the relevant embodiments, the present application further provides a welding system. Referring to FIG. 9, FIG. 9 is a schematic structural view of a welding system according to one or more embodiments.

The welding system 20 includes a welding apparatus 30 and the welding pressing plate 10 according to any of the above-mentioned embodiments. The welding pressing plate 10 is configured to press a weldment 5, and the welding apparatus 30 is configured to weld the weldment 5 along an edge of the weldment 5.

The welding apparatus 30 may be a laser welding apparatus, and laser welding has high welding efficiency and safety performance. Laser welding is a process of heating a surface to be processed with laser radiation, and surface heat is diffused to the interior by means of heat conduction. By controlling laser parameters such as the width, energy, peak power, and repetition frequency of the laser pulse, a workpiece is melted to form a specific molten pool, thereby welding two components together. Of course, in other embodiments, the welding apparatus 30 may also include, but is not limited to, a gas welding apparatus, a fusion welding apparatus, an ultrasonic welding apparatus, or the like. The welding system 20 may also include other apparatuses, such as a pressing apparatus and a conveying apparatus. The pressing apparatus can be used to press the movable pressing arm 200 so that the movable pressing arm 200 presses the weldment 5 through the pressing plate main body 100. The conveying apparatus can convey the weldment 5 to a welding station, etc.

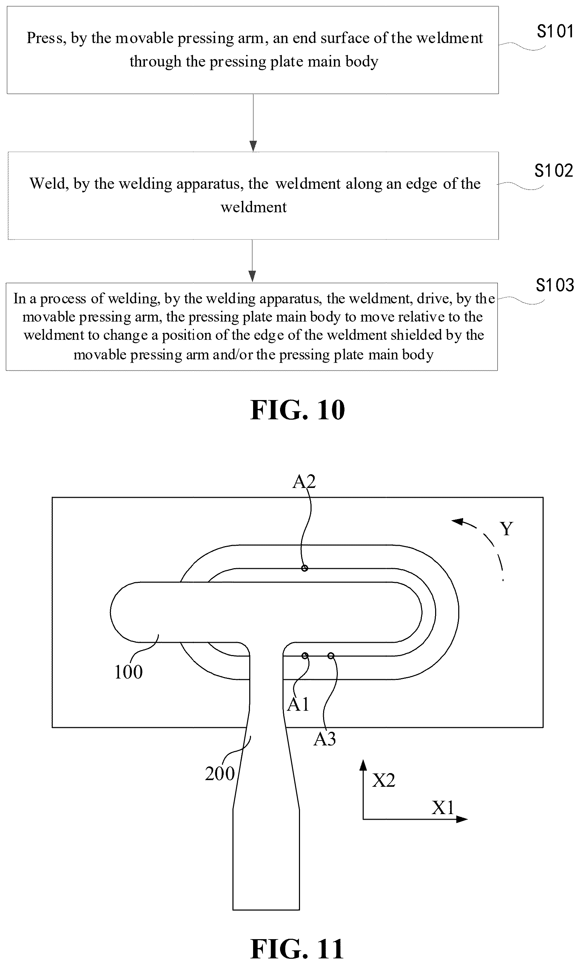

In order to solve the technical problems in the relevant embodiments, the present application further provides a welding method, which can be applied to the above-mentioned welding system 20. Referring to FIG. 10, FIG. 10 is a schematic flowchart of a welding method according to one or more embodiments, specifically, including the following steps S101 to S103.

Step S101: Press, by the movable pressing arm, an end surface of the weldment through the pressing plate main body.

The weldment 5 may be the above-mentioned electrode column cover plate 2. Of course, in other application scenarios, the weldment 5 may also be other components that need to be welded. For example, when the weldment 5 is the electrode column cover plate 2, the electrode column cover plate 2 can be first installed in the hollow groove of the electrode column main body 3, then the battery cell 1 is conveyed to the welding station, the pressing plate main body 100 covers an end surface of the electrode column cover plate 2 at the welding station, and an external force for pressing downward is applied to the movable pressing arm 200, so that the movable pressing arm 200 presses the end surface of the weldment 5 through the pressing plate main body 100, and the electrode column cover plate 2 and the electrode column main body 3 are tightly fitted, which facilitates subsequently welding the electrode column cover plate 2, thereby improving the stability of the welding.

Step S102: Weld, by the welding apparatus, the weldment along an edge of the weldment.

The welding apparatus 30 may include, but is not limited to, a laser welding apparatus, a gas welding apparatus, a fusion welding apparatus, an ultrasonic welding apparatus, and the like. The edge of the weldment 5 can be understood as the edge of the end surface of the weldment 5, or a side edge of the weldment 5 connected to the end surface of the weldment 5. For example, taking the weldment 5 as the electrode column cover plate 2 as an example, when the electrode column cover plate 2 is installed in the hollow groove of the electrode column main body 3, a joint of the outer edge of the electrode column cover plate 2 and the inner edge of the groove opening of the electrode column main body 3 can be the edge position where the welding apparatus 30 is required to perform welding.

Step S103: In a process of welding, by the welding apparatus, the weldment, drive, by the movable pressing arm, the pressing plate main body to move relative to the weldment to change a position of the edge of the weldment shielded by the movable pressing arm and/or the pressing plate main body.

The process of welding, by the welding apparatus 30, the weldment 5 can be understood as: in the process of welding, by the welding apparatus 30, the weldment 5 uninterruptedly, or, without considering whether the welding is interrupted, the entire process from the start of welding by the welding apparatus 30 to the completion of final welding can be understood as the process of welding, by the welding apparatus 30, the weldment 5. In the process of welding, the pressing plate main body 100 and/or the movable pressing arm 200 may shield the position needing to be welded, then the position of the edge of the weldment 5 shielded by the pressing plate main body 100 and/or the movable pressing arm 200 can be changed by moving the movable pressing arm 200 relative to the weldment 5. For example, the movable pressing arm 200 is connected to the side of the pressing plate main body 100 deviating from the weldment 5, and extends in the direction away from the weldment 5. An area of the end surface of the pressing plate main body 100 configured to cover the weldment 5 is larger than an area of the end surface of the weldment 5. At this time, when the pressing plate main body 100 covers the end surface of the weldment 5, the pressing plate main body 100 may shield the position of the edge of the weldment 5, while the movable pressing arm 200 may not shield the position of the edge of the weldment 5. The pressing plate main body 100 can be driven to move relative to the weldment 5 by the movable pressing arm 200 to change the position of the edge of the weldment 5 shielded by the pressing plate main body 100. For example, the movable pressing arm 200 can extend in a direction of the side wall of the pressing plate main body 100. The area of the end surface of the pressing plate main body 100 configured to cover the weldment 5 is less than the area of the end surface of the weldment 5. At this time, when the pressing plate main body 100 covers the end surface of the weldment 5, the pressing plate main body 100 may not shield the position of the edge of the weldment 5, while the movable pressing arm 200 may shield the position of the edge of the weldment 5. The pressing plate main body 100 can be driven to move relative to the weldment 5 by the movable pressing arm 200 to change the position of the edge of the weldment 5 shielded by the movable pressing arm 200. For example, the movable pressing arm 200 can extend in the direction of the side wall of the pressing plate main body 100. The area of the end surface of the pressing plate main body 100 configured to cover the weldment 5 is greater than the area of the end surface of the weldment 5. At this time, when the pressing plate main body 100 covers the end surface of the weldment 5, both the pressing plate main body 100 and the movable pressing arm 200 may shield the position of the edge of the weldment 5. The pressing plate main body 100 can be driven to move relative to the weldment 5 by the movable pressing arm 200 to change the position of the edge of the weldment 5 shielded by the movable pressing arm 200 and the pressing plate main body 100.

In the above embodiment, the weldment 5 is pressed by the movable pressing arm 200 and the pressing plate main body 100 to make the weldment 5 fit closely with other components, which facilitates welding the weldment 5, thereby improving the stability of welding. In the process of welding, the movable pressing arm 200 can also be moved to change the position of the edge of the weldment 5 shielded by the movable pressing arm 200 and/or the pressing plate main body 100, which facilitates welding along the edge of the weldment 5 while pressing the weldment 5, thereby improving the reliability of welding and the convenience in the process of welding.

In some embodiments, the step that drive, by the movable pressing arm 200, the pressing plate main body 100 to move relative to the weldment 5 includes: drive, by the movable pressing arm 200, the pressing plate main body 100 to be spaced apart from the end surface of the weldment 5; and when the pressing plate main body 100 is spaced apart from the end surface of the weldment 5, drive, by the movable pressing arm 200, the pressing plate main body 100 to move relative to the weldment 5. For example, when it is necessary for the movable pressing arm 200 to drive the pressing plate main body 100 to move, the movable pressing arm 200 can be first raised by a predetermined interval through other apparatuses, so that the movable pressing arm 200 drives the pressing plate main body 100 to be spaced apart from the end surface of the weldment 5, where the predetermined interval can be set according to actual conditions. For example, the predetermined interval can be less than 0.5 mm, so as to minimize the possibility that due to the large predetermined interval, weld beads generated during welding enter the end surface of the weldment 5 in the process of movement. After the pressing plate main body 100 is spaced apart from the end surface of the weldment 5, the pressing plate body 100 can be driven by the movable pressing arm 200 to move relative to the weldment 5, which can reduce the risk that in the process of movement, due to friction with the weldment 5, the weldment 5 and the welding pressure plate 10 are damaged, thereby improving the welding efficiency and the rate of finished products.

Further, after the step that drive, by the movable pressing arm 200, the pressing plate main body 100 to be spaced apart from the end surface of the weldment 5, the welding method further includes: input a positive pressure gas flow to a gas output port of the pressing plate main body 100 through a gas input hole 210 of at least one of the pressing plate main body 100 and the movable pressing arm 200. The pressing plate main body 100 may be provided with a gas output hole 110, an opening of the gas output hole 110 is located in an end surface of the pressing plate main body 100 configured to press the weldment 5, at least one of the pressing plate main body 100 and the movable pressing arm 200 may be provided with the gas input hole 210, and the gas input hole 210 is in communication with the gas output hole 110. After the movable pressing arm 200 drives the pressing plate main body 100 to be spaced apart from the end surface of the weldment 5, the weld beads generated by the welding apparatus 30 during welding may enter the end surface of the weldment 5. At this time, by inputting the positive pressure gas flow, the positive pressure gas flow can hit the end surface of the weldment 5 and diffuse outward along the end surface of the weldment 5 to reduce the risk of the weld beads generated during welding entering the end surface of the weldment 5. The input positive pressure gas flow may include, but is not limited to, inert gas such as nitrogen, so as to help effectively form a weld joint and make the formed weld joint round and smooth. Therefore, the positive pressure gas flow is output to the gas output hole 110 through the gas input hole 210, so that in the process of movement of the welding pressing plate 10, the weld beads generated during welding can be blown in a direction away from the end surface of the weldment 5 by the positive pressure gas flow, thereby reducing the risk of the weld beads splashing onto the end surface of the weldment 5 during welding.

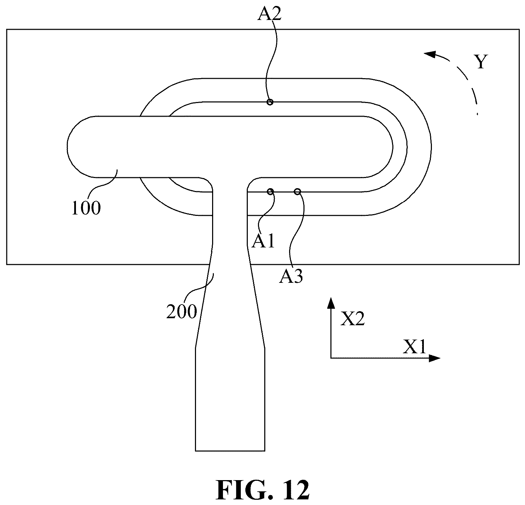

In combination with FIG. 11 and FIG. 12, FIG. 11 is a schematic structural view of the welding pressing plate pressing the weldment at a first position according to one or more embodiments, and FIG. 12 is a schematic structural view of the welding pressing plate pressing the weldment at a second position according to one or more embodiments.

The pressing plate main body 100 extends in a first direction X1, in a second direction X2 perpendicular to the first direction X1, the pressing plate main body 100 covers a non-edge region of the end surface of the weldment 5, and the movable pressing arm 200 extends in the second direction X2. The step that drive, by the movable pressing arm 200, the pressing plate main body 100 to move relative to the weldment 5 includes: if it is detected that the welding apparatus 30 performs welding from a first point A1 to a second point A2 in a welding direction Y, where the first point A1 is closer to the movable pressing arm 200 than the second point A2 in the welding direction Y, drive, by the movable pressing arm 200, the pressing plate main body 100 to move from the first position to the second position in the first direction X1, where the first position includes a position where the movable pressing arm 200 is located outside the first point A1 and the second point A2 in the welding direction Y, and the second position includes a position where the movable pressing arm 200 shields a region between the first point A1 and the second point A2 in the welding direction Y.

The welding direction Y can be understood as a direction of a welding trajectory formed by the welding apparatus 30 in the process of welding. For example, when the welding apparatus 30 welds the edge of the weldment 5 in a clockwise direction, the welding direction Y is the clockwise direction. When the welding apparatus 30 welds the edge of the weldment 5 in a counterclockwise direction, the welding direction Y is the counterclockwise direction. As shown in FIG. 11, when the movable pressing arm 200 is in the first position, the welding apparatus 30 can start from the first point A1 and performs welding to the second point A2 in the counterclockwise direction. The first point A1 can be a position close to the movable pressing arm 200. For example, the first point A1 is a position with a predetermined distance from the movable pressing arm 200, such as a position with the predetermined distance greater than 2 mm, etc., which can mitigate the influence of the movable pressing arm 200 on the welding apparatus 30 during welding. The second point A2 may be any position, for example, the second point A2 may be a position where the length of a path between the first point A1 and the second point A2 in the welding direction Y accounts for one third, one half, two fifths or three fifths of the length of a path of the edge of the weldment 5, etc. As shown in FIG. 12, when it is detected that the welding apparatus 30 performs welding to the second point A2, a control signal may be generated to control the movable pressing arm 200 to rotate from the first position to the second position. At the second position, the movable pressing arm 200 and the pressing plate main body 100 can only shield the edge of the weldment 5 between the first point A1 and the second point A2. Since the welding operation has been completed on the edge of the weldment 5 between the first point A1 and the second point A2, the movable pressing arm 200 and the pressing plate main body 100 move to this position, which can mitigate the problem that the movable pressing arm 200 and the pressing plate main body 100 shield other edges of the weldment 5 where welding has not been completed.

In some embodiments, an extension length of the pressing plate main body 100 in the first direction X1 is greater than an extension length of the end surface of the weldment 5 in the first direction X1; at the first position, the pressing plate main body 100 does not shield the edge of the weldment 5 between the first point A1 and the second point A2 in the first direction X1; at the second position, the pressing plate main body 100 does not shield the edge of the weldment 5 between the first point A1 and the second point A2 in an opposite direction of the first direction X1. The pressing plate main body 100 can shield the end surface of the weldment 5, thereby reducing the risk of the weld beads splashing onto the end surface of the weldment 5 during welding, the position of the edge of the weldment 5 shielded by the pressing plate main body 100 and the movable pressing arm 200 can be changed just by moving the pressing plate main body 100 in the first direction X1, thereby mitigating the problem that the pressing plate main body 100 hinders the welding operation along the edge of the weldment 5 and improving the welding efficiency.

In some embodiments, the step that weld, by the welding apparatus 30, the weldment 5 along the edge of the weldment 5 includes: weld, by the welding apparatus 30, along the edge of the weldment 5 to form a welding trajectory closed at both ends; and welding, by the welding apparatus 30, along a position closed at both ends to a third point A3 to form an ending trajectory, where the third point A3 is on the welding trajectory or outside the welding trajectory. The welding trajectory closed at both ends can be understood as follows: the welding apparatus 30 starts welding from a starting point and welds the edge of the weldment 5 in the welding direction Y until the welding apparatus performs welding to the starting point again to form a circular welding trajectory closed at both ends. Taking FIG. 11 and FIG. 12 as examples, the first point A1 is used as the starting point, and welding is performed in the welding direction Y, passing through the second point A2, and then welding is performed to the first point A1 again to form the circular welding trajectory closed at both ends. After forming the welding trajectory closed at both ends, the welding apparatus 30 can continue to perform welding to the third point A3. The third point A3 can be any position except the end surface of the weldment 5. For example, the third point A3 can be a position between the first point A1 and the second point A2 in the welding direction Y, or the third point A3 can also be a position located outside the edge of the weldment 5. For example, when the weldment 5 is the electrode column cover plate 2, the electrode column cover plate 2 is installed in the hollow groove of the electrode column main body 3, and the third point A3 can be located on the electrode column main body 3. Therefore, after achieving the welding trajectory closed at both ends, welding continues to the third point A3, making the entire welding trajectory more complete and the stability of the welded product higher.

In conclusion, the weldment 5 is pressed by the movable pressing arm 200 and the pressing plate main body 100 to make the weldment 5 fit closely with other components, which facilitates welding the weldment 5, thereby improving the stability of welding. In the process of welding, the movable pressing arm 200 can also be moved to change the position of the edge of the weldment 5 shielded by the movable pressing arm 200 and/or the pressing plate main body 100, which facilitates welding along the edge of the weldment 5 while pressing the weldment 5, thereby improving the reliability of welding and the convenience in the process of welding.

Finally, it should be noted that: the above embodiments are merely used for illustrating rather than limiting the technical solutions of the present application. Although the present application has been described in detail with reference to the various aforementioned embodiments, those of ordinary skill in the art should understand that the technical solutions specified in the various aforementioned embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A welding pressing plate, wherein the welding pressing plate comprises:
a pressing plate main body, configured to cover an end surface of a weldment; and
a movable pressing arm, connected to the pressing plate main body, wherein the movable pressing arm is configured to press the weldment through the pressing plate main body, and the movable pressing arm extends in a direction away from the pressing plate main body, and is capable of driving the pressing plate main body to move relative to the weldment to change a position of an edge of the weldment shielded by the movable pressing arm and/or the pressing plate main body.

2. The welding pressing plate according to claim 1, wherein the pressing plate main body extends in a first direction, in a second direction perpendicular to the first direction, the pressing plate main body is configured to cover a non-edge region of the end surface of the weldment, and the movable pressing arm extends in the second direction.

3. The welding pressing plate according to claim 2, wherein the movable pressing arm is arranged in the middle relative to both ends of the pressing plate main body in the first direction.

4. The welding pressing plate according to any one of claims 1 to 3, wherein the pressing plate main body is provided with a gas output hole, an opening of the gas output hole is located in an end surface of the pressing plate main body configured to press the weldment, at least one of the pressing plate main body and the movable pressing arm is provided with a gas input hole, and the gas input hole is in communication with the gas output hole.

5. The welding pressing plate according to claim 4, wherein the pressing plate main body is provided with a buffer gas cavity, and the gas output hole is in communication with the gas input hole through the buffer gas cavity.

6. The welding pressing plate according to claim 5, wherein the welding pressing plate comprises a first cover plate and a second cover plate, and the first cover plate and the second cover plate are fitted to form the pressing plate main body;
the first cover plate has a first buffer gas groove, and the second cover plate covers a groove opening of the first buffer gas groove to form the buffer gas cavity;
and/or, the second cover plate has a second buffer gas groove, and the first cover plate covers a groove opening of the second buffer gas groove to form the buffer gas cavity.

7. The welding pressing plate according to claim 5 or 6, wherein a plurality of gas output holes are provided, and the plurality of gas output holes are respectively in communication with the buffer gas cavity.

8. The welding pressing plate according to any one of claims 5 to 7, wherein the gas input hole is formed in the movable pressing arm, and the movable pressing arm is provided with a gas passage enabling the gas input hole to be in communication with the buffer gas cavity.

9. The welding pressing plate according to claim 8, wherein the welding pressing plate comprises a first cover plate and a second cover plate, and the first cover plate and the second cover plate are fitted to form the movable pressing arm;
the first cover plate has a first gas passing groove, and the second cover plate covers a groove opening of the first gas passing groove to form the gas passage;
and/or, the second cover plate has a second gas passing groove, and the first cover plate covers a groove opening of the second gas passing groove to form the gas passage;

10. The welding pressing plate according to claim 8, wherein the welding pressing plate comprises a first cover plate and a second cover plate, the first cover plate comprises a first main body portion and a second main body portion connected to each other, the second cover plate comprises a third main body portion and a fourth main body portion connected to each other, the first main body portion covers the third main body portion to form the pressing plate main body, and the second main body portion covers the fourth main body portion to form the movable pressing arm.

11. The welding pressing plate according to claim 10, wherein
the first main body portion has a first buffer gas groove, the second main body portion has a first gas passing groove in communication with the first buffer gas groove, the third main body portion covers a groove opening of the first buffer gas groove to form a buffer gas cavity, and the fourth main body portion covers a groove opening of the first gas passing groove to form the gas passage;
and/or, the third main body portion has a second buffer gas groove, the fourth main body portion has a second gas passing groove in communication with the second buffer gas groove, the third main body portion covers a groove opening of the second buffer gas groove to form a buffer gas cavity, and the second main body portion covers a groove opening of the second gas passing groove to form the gas passage.

12. A welding system, wherein the welding system comprises a welding apparatus and the welding pressing plate according to any one of claims 1 to 11, the welding pressing plate is configured to press a weldment, and the welding apparatus is configured to weld the weldment along an edge of the weldment.

13. A welding method, wherein the welding method is applied to the welding system according to claim 12, and the welding method comprises:
pressing, by the movable pressing arm, an end surface of the weldment through the pressing plate main body;
welding, by the welding apparatus, the weldment along an edge of the weldment; and
in a process of welding, by the welding apparatus, the weldment, driving, by the movable pressing arm, the pressing plate main body to move relative to the weldment to change a position of the edge of the weldment shielded by the movable pressing arm and/or the pressing plate main body.

14. The welding method according to claim 13, wherein the step of driving, by the movable pressing arm, the pressing plate main body to move relative to the weldment comprises:
driving, by the movable pressing arm, the pressing plate main body to be spaced apart from the end surface of the weldment; and
when the pressing plate main body is spaced apart from the end surface of the weldment, driving, by the movable pressing arm, the pressing plate main body to move relative to the weldment.

15. The welding method according to claim 14, wherein after the step of driving, by the movable pressing arm, the pressing plate main body to be spaced apart from the end surface of the weldment, the welding method further comprises:
inputting a positive pressure gas flow to a gas output port of the pressing plate main body through a gas input hole of at least one of the pressing plate main body and the movable pressing arm.

16. The welding method according to any one of claims 13 to 15, wherein the pressing plate main body extends in a first direction, in a second direction perpendicular to the first direction, the pressing plate main body is configured to cover a non-edge region of the end surface of the weldment, and the movable pressing arm extends in the second direction;
the step of driving, by the movable pressing arm, the pressing plate main body to move relative to the weldment comprises:
if it is detected that the welding apparatus performs welding from a first point to a second point in a welding direction, wherein the first point is closer to the movable pressing arm than the second point in the welding direction,
driving, by the movable pressing arm, the pressing plate main body to move from a first position to a second position in the first direction, wherein the first position comprises a position where the movable pressing arm is located outside the first point and the second point in the welding direction, and the second position comprises a position where the movable pressing arm shields a region between the first point and the second point in the welding direction.

17. The welding method according to claim 16, wherein an extension length of the pressing plate main body in the first direction is greater than an extension length of the end surface of the weldment in the first direction;
at the first position, the pressing plate main body does not shield the edge of the weldment between the first point and the second point in the first direction; and
at the second position, the pressing plate main body does not shield the edge of the weldment between the first point and the second point in an opposite direction of the first direction.

18. The welding method according to any one of claims 13 to 17, wherein the step of welding, by the welding apparatus, the weldment along the edge of the weldment comprises:
welding, by the welding apparatus, along the edge of the weldment to form a welding trajectory closed at both ends; and
welding, by the welding apparatus, along a position closed at both ends to a third point to form an ending trajectory, wherein the third point is on the welding trajectory or outside the welding trajectory.
